# EUROPEAN PATENT SPECIFICATION

(11) **EP 1 175 798 B1**
(45) Date of publication and mention of the grant of the patent: **21.06.2006**
(21) Application number: 99945311.1
(22) Date of filing: 27.08.1999
(51) Int. Cl.: H04Q 7/30

(54) **TRANSMISSION OF GSM CIRCUIT-SWITCHED DATA OVER A CDMA LINK**
ÜBERTRAGUNG VON GSM LEITUNGSVERMITTELTEN DATEN ÜBER EINE CDMA VERBINDUNG
TRANSMISSION DE DONNEES GSM COMMUTEES PAR CIRCUIT VIA UNE LIAISON AMCR

(30) Priority: 27.08.1998 US 140942
(43) Date of publication of application: 30.01.2002
(73) Proprietor: QUALCOMM INCORPORATED, San Diego, CA 92121-1714 (US)
(72) Inventor: NEVO, Ron, 20187 Misgav (IL); VAKULENKO, Michael, 35849 Haifa (IL); KOLOR, Sergio, 32922 Haifa (IL); NIZRI, Shlomo, 17910 Kibbutz Hasolelim (IL); KESSLER, Ilan, 34602 Haifa (IL); LEVY, Atai, 34612 Haifa (IL); SHINDELMAN, Dror, San Diego, CA 92121 (US)
(74) Representative: Walsh, Michael Joseph
(86) International application number: PCT/US1999/019808
(87) International publication number: WO 2000/013440

(56) References cited:
- WO-A-95/15644
- WO-A-96/21999
- WO-A-97/23073
- WO-A-97/23108
- WO-A-97/25824
- WO-A-97/44980
- WO-A-99/22470
- US-A- 4 761 763
- US-A- 5 592 480
- TSCHA ET AL.: "A Subscriber Signalling Gateway between CDMA Mobile Station and GSM Mobile Switching Center" INTERNATIONAL CONFERENCE ON UNIVERSAL PERSONAL COMMUNICATIONS IEEE, vol. 1, 12 October 1993 (1993-10-12), pages 181-185, XP002031666 New York,USA cited in the application

## Description

### FIELD OF THE INVENTION

The present invention relates generally to wireless telecommunications, and specifically to advanced cellular networks.

### BACKGROUND OF THE INVENTION

The Global System for Mobile (GSM) telecommunications is used in cellular telephone networks in many countries around the world. GSM offers a useful range of network services and standards, including facilities for data, as well as voice, transmission. Existing GSM networks are based on time-division multiple access (TDMA) digital communications technology.

Code-division multiple access (CDMA) is an improved digital communications technology, which affords more efficient use of radio bandwidth than TDMA, as well as a more reliable, fade-free link between cellular telephone subscribers and base stations. The leading CDMA standard is IS-95, promulgated by the Telecommunications Industry Association (TIA).

PCT patent application WO97/23108, describes a wireless telecommunications system that uses a CDMA air interface (i.e., basic RF communications protocols) to implement GSM network services and protocols. Using this system, at least some of the TDMA base stations (BSSs) and subscriber units of an existing GSM network would be replaced or supplemented by corresponding CDMA equipment. CDMA BSSs in this system are adapted to communicate with GSM mobile switching centers (MSCs) via a standard GSM A-interface. The core of GSM network services is thus maintained, and the changeover from TDMA to CDMA is transparent to users.

Hybrid cellular communications networks, incorporating both GSM and CDMA elements, are also described in PCT patent publications WO 95/24771 and WO 96/21999, and in an article by Tscha, et al., entitled "A Subscriber Signaling Gateway between CDMA Mobile Station and GSM Mobile Switching Center," in Proceedings of the 2nd International Conference on Universal Personal Communications, Ottawa (1993), pp. 181-185,

WO9922470 discloses a GSM mobile radio network with at least one base station controller and a base station, at least one first frequency channel for transmitting data and signalling information by a TDMA transmission process, and a second, additional broadband frequency channel with a TD/CDMA transmission process are made available between the base station and mobile stations. The time frames of both frequency channels are synchronised. The base station supports in a time slot the TDMA and/or the TD/CDMA transmission process, and thus a connection can be established in the time frame in the first or second frequency channels.

The above mentioned publications do not relate specifically to issues of data (non-voice) communications through hybrid cellular networks. Such issues include both the need for protocol compatibility and the different demands of voice and data communications.

Examples of different types of hybrid communications systems are discussed below, wherein various adaptations to standard operating procedures were made to take into account the hybrid nature of the system.

WO9515644 discloses a source facsimile apparatus including a modem having a variable transmission rate and is connected by a radio link to a destination facsimile apparatus which is located in a mobile subscriber station within a radio network. Facsimile data is transmitted at a selected data transmission rate from the source facsimile apparatus to a modem within an interworking function located in the radio network. A buffer memory stores the facsimile data received by the modem of the interworking function. The facsimile data is then transmitted from the buffer memory via the radio link to the destination facsimile apparatus within the mobile station. If the radio link does not allow facsimile data to be sent to the mobile station at about the same rate it is being received by the modem of the interworking function, the latter is changed to bring the two into closer conformity.

US5592480 discloses a wireless communication system basestation making use of a wideband, multichannel digital transceiver having incorporated therein a time division multiple-access (TDM) bus for providing digital samples of a plurality of wireless communication channels, wherein the time slot duration and frame rate of the TDM bus may be reconfigured. The invention allows various air interface standards, even those having different channel bandwidths, to be serviced by the same basestation, without having to install additional or different equipment, and by automatically redistributing signal processing resources, eliminating the need to reconfigure the basestation when different types of wireless signaling must be accommodated.

What is required therefore is a method and system for conveying data through a mixed GSM/CDMA cellular communications network which take account of the different demands between voice and data communications.

### SUMMARY OF THE INVENTION

It is an object of the present invention to provide methods and apparatus for conveying data through a mixed GSM/CDMA cellular communications network.

In some aspects of the present invention, methods and apparatus are provided to enable GSM circuit-switched data service capabilities over a CDMA air interface.

In preferred embodiments of the present invention, a mixed GSM/CDMA cellular communications system includes one or more CDMA base stations, controlled by a GSM mobile switching center (MSC). Systems of this type are further described in a U.S. patent application US19980119717 entitled "Base Station Handover in a Hybrid GSM/CDMA Network," filed July 20, 1998, which is assigned to the assignee of the present patent application.

A subscriber unit in the system, also referred to herein as a mobile station (MS), which is in communication with one of the CDMA base stations over a CDMA air interface, transmits and receives data through the system via the CDMA base station. The data are adapted by the mobile station and the base station so that the data transmitted and received at the MSC are substantially in accordance with GSM data networking protocols for circuit switched data.

The term "data" as used in the context of the present patent application and in the claims refers to substantially all types of data that are typically conveyed through communications networks, with the exception of real-time (coded or uncoded) voice transmission.

There is therefore provided as set out in the appended claims in accordance with the present invention, in a GSM mobile wireless telecommunications system, a method for conveying data from terminal equipment to a network via a CDMA air interface, including:
receiving the data as input from the terminal equipment;
transmitting the data at a CDMA data transfer rate over the CDMA air interface; and
transferring the data to the network over a GSM A-interface using a GSM circuit switched data protocol.

There is further provided, in accordance with the present invention, in a GSM mobile wireless telecommunications system, a method for conveying data received over a network to terminal equipment via a CDMA air interface, including:
receiving the data from the network using a GSM protocol for circuit switched data services;
transmitting the data at a CDMA data transfer rate over the CDMA air interface; and
outputting the data to the terminal equipment.

In the methods according to the invention transmitting the data includes transferring data at a variable rate, responsive to a data volume to be conveyed over the air interface, wherein transferring the data includes opening a fundamental channel for conveying the data and signaling thereover, and responsive to the data volume opening one or more supplemental channels to carry the data. Preferably, opening the supplemental channels includes opening a different number of channels in forward and reverse directions over the air interface. Alternatively or additionally, one or more of the supplemental channels are closed in response to a decrease in the data rate.

There is also provided, in accordance with the present invention, a wireless communications system for use in a mobile telecommunications system, as defined in Claim 7.

Preferred embodiments of the sytem are defined in corresponding dependent claims.

The present invention will be more fully understood from the following detailed description of the preferred embodiments thereof, taken together with the drawings in which:

### BRIEF DESCRIPTION OF THE DRAWINGS

Fig. 1 is a schematic block diagram of a hybrid GSM/CDMA cellular communications system, in accordance with a preferred embodiment of the present invention; and
Figs. 2A and 2B are schematic block diagrams illustrating communications protocol stacks between elements of the system of Fig. 1, in accordance with a preferred embodiment of the present invention.

### DETAILED DESCRIPTION OF PREFERRED EMBODIMENTS

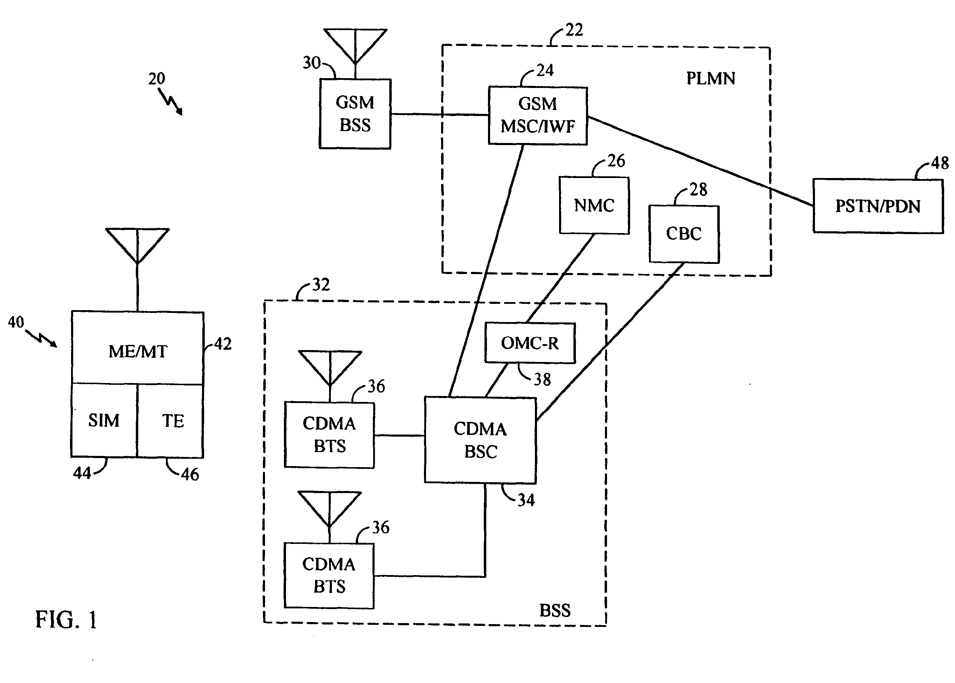

Reference is now made to Fig. 1, which is a schematic block diagram of a hybrid GSM/CDMA cellular communications system 20, in accordance with a preferred embodiment of the present invention. System 20 is built around a public land mobile network (PLMN) 22, which is based on the GSM communications standard, as is known in the art and described briefly hereinabove. Infrastructure for such networks already exists and is in wide use in many countries, and the present invention has the advantage of enabling gradual introduction of CDMA service is conjunction with such a network without requiring major changes to the existing switching infrastructure.

PLMN 22 comprises at least one mobile-services switching center (MSC) 24, or possibly a number of such centers (although only one MSC is shown here for clarity of illustration), which controls network operations within a geographical area. Among other functions, MSC 24 is responsible for location registration of subscriber units and handover of subscriber units between base stations, as well as linking PLMN 22 to a public switched telephone network (PSTN) and/or packet data network (PDN) 48. The MSC also includes or is linked to an inter-working function (IWF), which supports data communications as described hereinbelow, in accordance with GSM standards. The PLMN also comprises a network management center (NMC) 26 and a cell broadcast center (CBC) 28. The functions of these elements, as well as other aspects of system 20 and details regarding a mobile station (MS) 40 in the system, are described further in the above-mentioned U.S. and PCT Patent Applications.

System 20 includes a plurality of MSs 40, which communicate with PLMN 22 via a plurality of base station subsystems (BSS) 30 and 32 over a wireless RF link at one or more of the accepted cellular communications frequencies. MS 40, which is also known as a subscriber unit, is preferably capable of communicating with both GSM BSS 30, using a standard GSM TDMA radio communications protocol, and CDMA BSS 32, using CDMA-based communication methods described hereinbelow. Although for the sake of clarity, only one each of MS 40, GSM BSS 30 and CDMA BSS 32 is shown in Fig. 1, it will be understood that in actuality, system 20 typically comprises a plurality of each of these system elements.

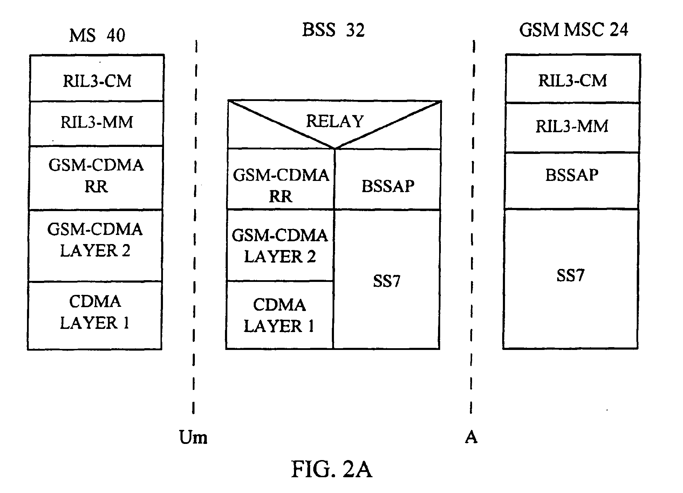

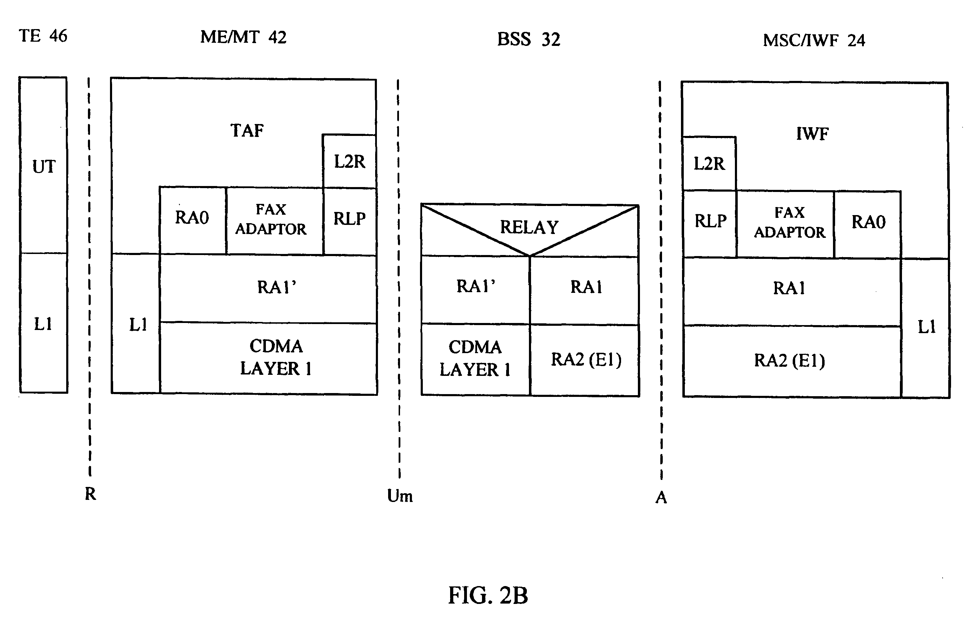

Both GSM BSS 30 and CDMA BSS 32 communicate with and are controlled by MSC 24, substantially in accordance with GSM standards, i.e., via the GSM standard A-interface, as further described hereinbelow with reference to Figs. 2A and 2B. BSS 32 also communicates with CBC 28, so as to receive messages to be broadcast over the air, and comprises a radio operation and maintenance center (OMC-R) 38, which communicates with NMC 26 over a GSM-standard Q3 interface. Optionally, BSS 32 may be linked to a general packet data service (GPRS), such as has been proposed by the European Telecommunications Standards Institute (ETSI). Communications between BSS 32 and the GPRS are further described in U.S. patent US6,320,873 entitled "CDMA Transmission of Packet-Switched Data," which is assigned to the assignee of the present patent application,

Communications between CDMA BSS 32 and MS 40 are built on a CDMA radio "air interface," which is preferably based on the IS-95 standard for CDMA communications, and most preferably with the TIA/EIA-95-B version of the standard, with necessary modifications as described herein. BSS 32 is built around a base station controller (BSC) 34, which controls and communicates with a number of base station transceivers (BTS) 36. Each BTS transmits RF signals to and receives RF signals from MS 40 when the MS is within a geographical area, or cell, served by the particular BTS. On the other hand, when MS 40 is within a cell served by GSM BSS 30, the MS communicates with BSS 30 over a GSM/TDMA air interface.

In order to sustain both of these interfaces, MS 40 comprises mobile equipment (ME) 42, which preferably includes either two radio transceivers, one configured for TDMA operation and one for CDMA, or a single transceiver which can dynamically switch between TDMA and CDMA. The MS includes mobile termination (MT), which supports terminal equipment (TE) 46 for data input and output. Preferably, TE 46 comprises a user terminal, such as a personal computer or fax machine, coupled to input and output data via the MT. In addition, MS 40 comprises a subscriber identity module (SIM) 44, in accordance with GSM standards.

Fig. 2A is a block diagram that schematically illustrates protocol stacks used in signaling interfaces between MS 40, CDMA BSS 32 and GSM MSC 24, in accordance with a preferred embodiment of the present invention. These interfaces enable MS 40 to communicate with GSM MSC 24 over a CDMA air interface. Operation of these interfaces, and particularly message flow through these interfaces, is described in greater detail in the above-mentioned PCT application WO97/23108 as well as in the above-mentioned U.S. patent US6,320,873 entitled "Base Station Handover in a Hybrid GSM/CDMA Network." When MS 40 is in communication with MSC 24 via GSM BSS 30, the protocol stacks are in accordance with GSM standards, substantially without modification.

MS 40 communicates with CDMA BSS 32 over a CDMA Um interface, based on a CDMA air interface which is modified for compatibility of signaling with the GSM standard. The CDMA air interface between MS 40 and CDMA BSS 32 comprises CDMA Layer 1, which preferably operates on a standard IS-95 protocol, and GSM-CDMA Layer 2, in which IS-95 operation is adapted to accommodate the needs of GSM Layer 3 protocols. Layer 2 supports transmission of frames between MS 40 and BSS 30 or 32. GSM-CDMA Layer 2 includes functionality, such as message ordering, priority and fragmentation, and suspension and resumption of communications, which is normally supported by the standard GSM Layer 2, but not by CDMA IS-95. GSM-CDMA Layer 2 also supports message sizes up to at least the maximum message size permitted by GSM Layer 2 (251 bytes), which is greater than the maximum IS-95 message size. Vis-a-vis GSM BSS 30, air interface Layers 1 and 2 are in accordance with GSM standards, substantially without modification.

Standard GSM protocols include three Radio Interface sub-layers (RIL3) above the physical and framing layers GSM Layer 1 and Layer 2: Radio Resource (RR) management, Mobile Management (MM) and Connection Management (CM) . The CM layer supports signaling for call processing, as well as GSM supplementary services and short message service (SMS). The MM layer supports signaling required for locating MS 40, authentication and encryption key management.

In order to support the substantially unmodified GSM MM and CM layers, a GSM-CDMA RR layer is introduced in the MS 40 and BSS 32 protocol stacks. The GSM-CDMA RR layer, which manages radio resources and maintains radio links between MS 40 and BSSs 30 and 32, is "aware" of the existence of the dual GSM and CDMA lower layers (Layers 1 and 2) in the MS 40 protocol stack. It invokes the appropriate lower layers in the MS stack to communicate with either the standard RIL3-RR layer over the GSM Um interface or the GSM-CDMA RR layer of BSS 32 over the CDMA Um interface, depending on instructions it receives from the BSS with which it is in communication. The RR layer in the MS stack also controls the handover between the corresponding air interfaces defined in Layers 1 and 2, under instructions from MSC 24, BSS 30 and BSS 32.

Regardless of which of the air interfaces is in use, the GSM-CDMA RR layer supports the standard GSM RIL3-MM and CM layers above it. The MM and CM layers are not processed by BSS 32, but are rather relayed through between MS 40 and MSC 24 for processing in a manner substantially transparent to the CDMA air interface layers below. Further features of the RR layer are described in the above-mentioned U.S. patent application entitled "Base Station Handover in a Hybrid GSM/CDMA Network."

CDMA BSS 32 communicates with GSM MSC 24 over a standard, substantially unmodified GSM A-interface. This interface is based on the GSM SS7 and BSS Application Part (BSSAP) protocols, as are known in the art, preferably in accordance with the GSM 08.06 and 08.08 standard. BSSAP supports procedures between MSC 24 and BSS 32 that require interpretation and processing of information related to single calls and resource management, as well as transfer of call control and mobility management messages between MSC 24 and MS 40. BSS 32 translates CDMA Layer 1, GSM-CDMA Layer 2 and GSM-CDMA RR protocols exchanged between the BSS and MS 40 into appropriate SS7 and BSSAP protocols for transmission to MSC 24, and vice versa.

Because CDMA BSC 34 communicates with GSM MSC 24 using the standard A-interface, substantially no modifications are required in the core GSM MSC in order to enable the addition of CDMA BSS 32 to GSM system 20. Furthermore, MSC 24 need not be aware that there is any difference in identity between GSM/TDMA BSS 30 and CDMA BSS 32, since both communicate with the MSC in a substantially identical manner over the A-interface.

Fig. 2B is a block diagram that schematically illustrates transmission protocol stacks involved in providing circuit-switched data via MS 40 and CDMA BSS 32 and MSC/IWF 24, in accordance with a preferred embodiment of the present invention. ME/MT 42 exchanges user data with TE 46 via a connection at a reference point R, using a GSM-compatible terminal adaptation function (TAF) in the MS. The TAF is adapted to whatever TE protocol is in use, such as an asynchronous protocol, as is known in the art, or alternatively a synchronous protocol. When the incoming data are asynchronous, MS 40 applies a rate adaptation (RA0) function, in accordance with GSM protocols, which pads the asynchronous data with additional stop elements so as to fit the nearest available GSM synchronous data channel. These data channels have rates of 2ⁿ x 600 bit/sec (so that 75 bit/sec and 300 bit/sec signaling rates are adapted to a synchronous 600 bit/sec stream). MSC/IWF 24 includes a RA0 function that is a "mirror image" of RA0 in MS 40. MS 40 and MSC/IWF 24 also include a GSM fax adapter function, which provides a standard fax interface in the MS and compensates for differences in transmission delays encountered in cellular, as opposed to wired, communication networks.

Known (non-transparent) user protocols are transported from MS 40 to MSC 24 through BSS 32 using a GSM Layer 2 relay (L2R) function, preferably in accordance with GSM standard 07.01. Whereas transparent protocols generally transmit an input bitstream without modification, non-transparent protocols modify the bitstream before transmission, typically in order to reduce the required transmission data rate. L2R uses the services provided by a GSM radio link protocol (RLP), preferably in accordance with GSM standard 04.22, to reliably transport the L2R protocol information over the air.

Synchronous user data output by RAO and by the fax adapter and RLP functions of MS 40 are adapted for transport over the CDMA Um interface by a rate adapter 1' (RA1') function. RA1' adapts the data rates of RA0, the fax adapter and RLP to IS-95 radio interface data rates, which are generally different from the GSM data rates. Higher data rates, over 9,600 bps, can be accommodated by IS-95 medium data rate (MDR) transmission, as further described hereinbelow.

Rate adaptation between BSS 32 and MSC /IWF 24 is performed by GSM rate adaptation 1 (RA1) and rate adaptation 2 (RA2) functions, so that the data are conveyed over the A-interface at a standard GSM circuit switched data rate. The RA1 function adapts the synchronous data conveyed by RA1' to intermediate data rates of 8 or 16 kbit/sec. The RA2 function is specified by CCITT standard V.110 and is used to adapt RA1 data to a 64 kbit/sec rate, as required by CCITT E1 data transport protocols. These protocols are based on a 2 Mbit/sec data stream, with a frame structure of 32 x 64 kbit/sec. The MSC/IWF is shown schematically to include an L1 layer, by means of which the user data from TE 46 are output to a compatible terminal or fax (not shown in the figures), generally after transport over PSTN/PDN 48.

Although the communications protocol layers above are described generally with reference to functions required to adapt a data stream from TE 46 for transport to MSC/IWF 24, it will be understood that the same protocol layers are also used to adapt synchronous, high-speed data from MSC/IWF 24 for transport to and output by TE 46. MSC/IWF 24 thus transmits and receives data to and from TE 46 via ME/MT 42 and BSS 32 substantially without regard to the fact that the data between the BSS and MS 40 are CDMA-encoded, as though MS 40 were operating in GSM/TDMA mode.

As noted hereinabove, when the user data rate exceeds ordinary CDMA traffic channel rates, the IS-95 MDR feature for high-speed data services is preferably used to accommodate the excess data. In this case, MS 40 and BSS 32 open multiple traffic channels between them. Since there is frequently a greater volume of data being transported in one direction than in the other (most frequently in a forward direction, i.e., from BSS 32 to MS 40) the number of channels opened in the two directions need not be equal. For example, there may be four forward channels and only two reverse channels opened. In each direction, there is preferably one fundamental code traffic channel, which carries signaling (Fig. 2A) along with data, and up to seven supplemental code traffic channels for high-speed data. The fundamental channel is active substantially continuously, whereas the supplemental channels are activated as needed based on the total data rate at any time.

IS-95 MDR can be used to provide high-speed data service comparable to that defined in the GSM Phase 2+ standard for high-speed circuit-switched data (HSCSD). The IS-95 MDR CDMA transmission has the advantage, however, of dynamic bandwidth allocation, as opposed to static allocation of TDMA time slots in HSCSD. This CDMA approach thus allows more efficient use of the available transmission spectrum, both at MDR and at normal data rates, than does the conventional GSM TDMA approach.

Although preferred embodiments are described hereinabove with reference to a particular hybrid GSM/CDMA system, it will be appreciated that the principles of the present invention may similarly be applied to effect over-the-air data transfer in other hybrid GSM/CDMA communication systems, as well.

It will thus be appreciated that the preferred embodiments described above are cited by way of example, and the full scope of the invention is limited only by the claims.

## Claims

1. A method for conveying data in a GSM mobile wireless telecommunications system from terminal equipment (46) to a network (22) via a CDMA air interface, the method comprising the steps of:
receiving the data as input from the terminal equipment (46);
transmitting the data at a CDMA data transfer rate over the CDMA air interface; and
transferring the data to the network over a GSM A-interface using a GSM circuit switched data protocol,
wherein the step of transmitting the data comprises transferring data at a variable rate, responsive to a data volume to be conveyed over the air interface, and
wherein the step of transferring the data comprises opening a fundamental channel for conveying the data and signaling thereover, and opening one or more supplemental channels, responsive to the data volume, to carry the data.

2. A method according to Claim 1, wherein opening the supplemental channels comprises opening a different number of channels in forward and reverse directions over the air interface.

3. A method according to Claim 1, and comprising closing one or more of the supplemental channels in response to a decrease in the data rate.

4. A method for conveying data received over a network (22) in a GSM mobile wireless telecommunications system to terminal equipment (46) via a CDMA air interface, the method comprising the steps of:
receiving the data from the network (22) over a GSM A-interface using a GSM protocol for circuit switched data services;
transmitting the data at a CDMA data transfer rate over the CDMA air interface; and
outputting the data to the terminal equipment (46),
wherein the step of transmitting the data comprises transferring data at a variable rate, responsive to a data volume to be conveyed over the air interface, and
wherein the step of receiving the data comprises opening a fundamental channel for conveying the data and signaling thereover, and opening one or more supplemental channels, responsive to the data volume, to carry the data.

5. A method according to Claim 4, wherein opening the supplemental channels comprises opening a different number of channels in forward and reverse directions over the air interface.

6. A method according to Claim 4, and comprising closing one or more of the supplemental channels in response to a decrease in the data rate.

7. A wireless communications system (20), for use in a mobile telecommunications network, comprising:
a mobile station (40), coupled to exchange data with terminal equipment (46), adapted to communicate the data at a CDMA data transfer rate over a CDMA air interface;
a base station (32), adapted to communicate with the mobile station (40) over the CDMA air interface, and which is coupled to a network (22) so as to exchange data over the network in accordance with a GSM circuit switched data protocol,
means for varying a data transfer rate over the air interface responsive to a data volume to be conveyed thereover; and
means for varying the data transfer rate by opening, responsive to the data volume, one or more supplemental channels between the mobile station and base station in addition to a fundamental channel that is opened therebetween.

8. System according to Claim 7, further comprising means for opening different numbers of channels in forward and reverse directions between the mobile station and base station.

9. Sytem according to Claim 7, further comprising means for closing one or more of the supplemental channels in response to a decrease in the data rate.

## Patentansprüche

1. Ein Verfahren zum Übertragen von Daten in einem drahtlosen GSM-Mobiltelekommunikationssystem von einem Terminal- bzw. Endgerät (46) an ein Netzwerk (22) über ein CDMA-Luft- bzw. -Airinterface, wobei das Verfahren die folgenden Schritte aufweist:
Empfangen der Daten als Eingang von dem Endgerät (46);
Übertragen der Daten mit einer CDMA-Datentransferrate über das CDMA-Airinterface; und
Übertragen der Daten an das Netzwerk über ein GSM-A-interface unter Verwendung eines GSM-Leitungsvermittelten-Datenprotokolls (circuit switched data protocol),
wobei der Schritt der Übertragung der Daten das Transferrieren der Daten mit einer variablen Rate aufweist und zwar ansprechend auf ein Datenvolumen, das über das Airinterface übertragen werden soll, und
wobei der Schritt des Transferrierens der Daten das Öffnen eines Fundamentalkanals aufweist zum Übertragen der Daten und eine Signalisierung darüber und das Öffnen von einem oder mehreren Zusatzkanälen ansprechend auf das Datenvolumen, um die Daten zu tragen.

2. Verfahren nach Anspruch 1, wobei das Öffnen der Zusatzkanäle das Öffnen einer unterschiedlichen Anzahl von Kanälen in Vorwärts- und Rückwärtsrichtungen über das Airinterface aufweist.

3. Verfahren nach Anspruch 1, das ferner das Schließen von einem oder mehreren der Zusatzkanäle ansprechend auf eine Verringerung der Datenrate aufweist.

4. Verfahren zum Übertragen von Daten, die über ein Netzwerk (22) empfangen werden in einem drahtlosen GSM-Mobiltelekommunikationssystem an einem Terminal bzw. Endgerät (46) über ein CDMA-Luft- bzw. -Airinterface, wobei das Verfahren die folgenden Schritte aufweist:
Empfangen der Daten von dem Netzwerk (22) über ein GSM-A-interface unter Verwendung eines GSM-Protokolls für leitungsvermittelte Datendienste (circuit switched data services);
Übertragen der Daten mit einer CDMA-Datentransferrate über das CDMA-Airinterface; und
Ausgeben der Daten an das Endgerät (46),
wobei der Schritt des Übertragens der Daten das Transferrieren mit einer variablen Rate aufweist, und zwar ansprechend auf ein Datenvolumen, das über das Airinterface übertragen werden soll, und
wobei der Schritt des Empfangens der Daten das Öffnen eines Fundamentalkanals aufweist zum Übertragen der Daten und einer Signalisierung darüber, und das Öffnen von einem oder mehreren Zusatzkanälen ansprechend auf das Datenvolumen, um die Daten zu tragen.

5. Verfahren nach Anspruch 4, wobei das Öffnen der Zusatzkanäle das Öffnen einer unterschiedlichen Anzahl von Kanälen in Vorwärts- und Rückwärtsrichtungen über das Airinterface aufweist.

6. Verfahren nach Anspruch 4, das ferner das Schließen von einem oder mehreren der Zusatzkanäle ansprechend auf eine Verringerung der Datenrate aufweist.

7. Drahtloses Kommunikationssystem (20) zur Verwendung in einem Mobiltelekommunikationsnetzwerk, wobei das System Folgendes aufweist:
eine Mobilstation (40), die zum Austausch von Daten mit einem Terminal- bzw. Endgerät (46) gekoppelt ist, das geeignet ist zum Kommunizieren der Daten mit einer CDMA-Datentransferrate über ein CDMA-Luft- bzw. -Airinterface;
eine Basisstation (32), die in der Lage ist mit der Mobilstation (40) zu kommunizieren über das CDMA-Airinterface und das mit einem Netzwerk (22) gekoppelt ist, um Daten über das Netzwerk gemäß einem GSM-Leitungsvermittelten Datenprotokoll (circuit switched data protocol) auszutauschen,
Mittel zum Variieren einer Datentransferrate über das Airinterface ansprechend auf ein Datenvolumen, das darüber übertragen werden soll; und
Mittel zum Variieren der Datentransferrate durch Öffnen, ansprechend auf das Datenvolumen, von einem oder mehreren Zusatzkanälen zwischen der Mobilstation und der Basisstation zusätzlich zu einem Fundamentalkanal, der dazwischen geöffnet ist.

8. System nach Anspruch 7, das ferner Mittel aufweist zum Öffnen unterschiedlicher Anzahlen von Kanälen in Vorwärts- und Rückwärtsrichtungen zwischen der Mobilstation und der Basisstation.

9. System nach Anspruch 7, das ferner Mittel aufweist zum Schließen von einem oder mehreren der Zusatzkanäle ansprechend auf eine Verringerung der Datenrate.

## Revendications

1. Procédé de transfert de données dans un système de télécommunication sans fil mobile GSM d'un équipement terminal (46) à un réseau (22) par l'intermédiaire d'une interface aérienne CDMA, ce procédé comprenant les étapes suivantes :
réception des données à partir de l'équipement terminal (46) ;
émission des données à un débit de transfert de données CDMA sur l'interface aérienne CDMA; et
transfert des données vers le réseau sur une interface GSM A en utilisant un protocole de données commutées par circuit GSM,
dans lequel l'étape d'émission de données comprend un transfert de données à un débit variable, en réponse à un volume de données à transporter sur l'interface aérienne, et
dans lequel l'étape de transfert des données comprend l'ouverture d'un canal fondamental pour transporter les données et une signalisation ajoutée, et l'ouverture d'un ou plusieurs canaux supplémentaires, en réponse au volume de données, pour transporter les données.

2. Procédé selon la revendication 1, dans lequel l'ouverture de canaux supplémentaires comprend l'ouverture d'un nombre différent de canaux dans les directions directe et inverse sur l'interface aérienne.

3. Procédé selon la revendication 1, comprenant la fermeture d'un ou plusieurs des canaux supplémentaires en réponse à une diminution du débit de données.

4. Procédé de transport de données reçues sur un réseau (22) dans un système de télécommunication sans fil mobile GSM vers un équipement terminal (46) par l'intermédiaire d'une interface aérienne CDMA, ce procédé comprenant les étapes suivantes :
réception des données du réseau (22) sur une interface GSM A en utilisant un protocole GSM pour des services de données commutées par circuit ;
émission des données à un débit de transfert de données CDMA sur l'interface aérienne CDMA ; et
fourniture des données à l'équipement terminal (46),
dans lequel l'étape d'émission de données comprend un transfert de données à un débit variable, en réponse à un volume de données à transporter sur l'interface aérienne, et
dans lequel l'étape de réception des données comprend l'ouverture d'un canal fondamental pour transporter les données et une signalisation ajoutée, et l'ouverture d'un ou plusieurs canaux supplémentaires, en réponse au volume de données, pour transporter les données.

5. Procédé selon la revendication 4, dans lequel l'ouverture de canaux supplémentaires comprend l'ouverture d'un nombre différent de canaux dans les directions directe et inverse sur l'interface aérienne.

6. Procédé selon la revendication 4, comprenant la fermeture d'un ou plusieurs des canaux supplémentaires en réponse à une diminution du débit de données.

7. Système de communication sans fil (20), destiné à être utilisé dans un réseau de télécommunication mobile, comprenant :
un poste mobile (40) couplé pour échanger des données avec un équipement terminal (46) adapté à communiquer les données à un débit de transfert de données CDMA sur une interface aérienne CDMA ;
une station de base (32), adaptée à communiquer avec le poste mobile (40) sur l'interface aérienne CDMA, et couplée à un réseau (22) de façon à échanger des données sur le réseau en accord avec un protocole de données commutées par circuit GSM ;
des moyens pour faire varier le débit de transfert de données sur l'interface aérienne en réponse au volume de données à transporter ; et
des moyens pour faire varier le débit de transfert de données en ouvrant, en réponse au volume de données, un ou plusieurs canaux supplémentaires entre le poste mobile et la station de base en plus d'un canal fondamental qui est ouvert entre eux.

8. Système selon la revendication 7, comprenant en outre des moyens d'ouverture de nombres différents de canaux dans les directions directe et inverse entre le poste mobile et la station de base.

9. Système selon la revendication 7, comprenant en outre des moyens de fermeture d'un ou plusieurs des canaux supplémentaires en réponse à une diminution du débit de données.
